# EUROPEAN PATENT APPLICATION

(11) **EP 4 838 177 A1**
(43) Date of publication of application: **11.11.2026**
(21) Application number: 26177009.3
(22) Date of filing: 06.05.2026
(51) Int. Cl.: G01C 21/36, G06F 16/9537

(54) **METHOD, APPARATUS, AND COMPUTER PROGRAM PRODUCT FOR APPLYING CLIENT-PROVIDED PARAMETERS TO A LOCATION SERVICES SYSTEM CONFIGURED WITH A LARGE LANGUAGE MODEL**

(30) Priority: 08.05.2025 US 202519201977
(71) Applicant: HERE Global B.V., 5611 ZT Eindhoven (NL)
(72) Inventor: Mazzola,, Amanda, 5611 ZT Eindhoven (NL); Davidson,, Matthew, 5611 ZT Eindhoven (NL); Hernandez,, Jonathan, 5611 ZT Eindhoven (NL)
(74) Representative: Potter Clarkson

(57) **Abstract**

A large language model (LLM) is updated with contextual location information, such as from one or more third party systems. Requests originating from an in-vehicle system are transmitted via a client system, such as one associated with an original equipment manufacturer (OEM), to a location services system. The client system provides client-provided parameters, such as relating to tone, messaging style, brand consistency, to influence search results or associated natural language descriptions of locations included in the search results. User profile data is used to target or tailor the search results, and associated descriptions for the user. Some client-provided parameters and user profile data can be weighted differently, and search results can be ranked according to client -provided parameters, user profile data and/or the like.

## Description

### TECHNOLOGICAL FIELD

An example embodiment of the present disclosure relates to location services, and more particularly, to applying client-provided parameters to a location services system configured with a large language model.

### BACKGROUND

Service providers and device manufacturers (e.g., wireless, cellular, navigation, vehicles etc.) are continually challenged to deliver value and convenience to consumers by providing improved location-based services. Many location-based services, such as navigation and routing services, provide information regarding restaurants, retail institutions, points of interest, and the like. The information regarding the various locations provided to users is often static, and may not be targeted for the particular user or scenario.

In many Internet-based systems, such as social media platforms, streaming systems, and the like, content or advertising is targeted to the user based on viewing history, user preferences, user-provided ratings and feedback, and the like. As ubiquitous computing continues to involve, the amount of data relating to a user, location feedback and preferences, and the like, has increased. The use of both mobile devices and in-vehicle systems in everyday life and while commuting from place to place and visiting various locations further facilitates the generation of a vast array of data pertaining to user preferences and locations.

### BRIEF SUMMARY

A method, apparatus, and computer program product are provided in accordance with an example embodiment described herein for applying client-provided parameters to a location services system configured with a large language model.

An apparatus is provided, comprising at least one processor and at least one memory including computer program code, the at least one memory and the computer program code configured to, with the at least one processor, cause the apparatus to at least receive a request that originated at least from an in-vehicle system associated with a vehicle and a client system, wherein the request is based on at least one user-initiated query. The at least one memory and the computer program code are further configured to, with the at least one processor, cause the apparatus to receive, from the client system, one or more client-provided parameters, and access user profile data associated with the at least one user-initiated query.

The at least one memory and the computer program code are further configured to, with the at least one processor, cause the apparatus to generate a response by applying the request, the one or more client-provided parameters, and the user profile data to a location search engine, wherein the location search engine is configured with at least a large language model (LLM). The at least one memory and the computer program code are further configured to, with the at least one processor, cause the apparatus to transmit the response to the client system.

According to certain embodiments, the apparatus is configured to communicate with a plurality of client systems, and the plurality of client systems comprise one or more original equipment manufacturer (OEM) systems.

The one or more client-provided parameters comprise at least one of one or more tone-based instructions, one or more messaging style instructions, one or more branding consistency instructions, one or more economic-based instructions, or one or more sponsorship-based instructions.

The at least one memory and the computer program code are further configured to, with the at least one processor, cause the apparatus to apply a weight to the one or more client-provided parameters, wherein the weighted one or more client-provided parameters are applied to generate the response.

The at least one memory and the computer program code are further configured to, with the at least one processor, cause the apparatus to access one or more third party systems configured to provide contextual location information, and update the LLM by applying the contextual location information to the LLM, wherein the response is generated further based on the contextual location information from the one or more third party systems.

The response comprises at least one of a location-based search result, a navigation instruction, a natural language description, or a vehicle control instruction. The information comprised by the response is provided via a user interface of the in-vehicle system.

The at least one memory and the computer program code are further configured to, with the at least one processor, cause the apparatus to facilitate an interactive feedback loop during which a user provides refined request parameters, update the response according to the refined request parameters, and transmit the updated response to the client system.

The at least one memory and the computer program code are further configured to, with the at least one processor, cause the apparatus to facilitate customization of the one or more client-provided parameters via the client system.

At least one of the one or more client-provided parameters comprises sensor data detected from the vehicle.

According to certain embodiments, the response is utilized for providing routing instructions via a user interface of the in-vehicle system.

According to certain embodiments, the response is utilized for at least partial control of an automated driving system of the vehicle.

A computer implemented method is provided, including receiving a request that originated at least from an in-vehicle system associated with a vehicle and a client system, wherein the request is based on at least one user-initiated query, and receiving, from the client system, one or more client-provided parameters.

The computer implemented method further includes accessing user profile data associated with the at least one user-initiated query, generating a response by applying the request, the one or more client-provided parameters, and the user profile data to a location search engine, wherein the location search engine is configured with at least a large language model (LLM), and transmitting the response to the client system.

According to certain embodiments, an apparatus that performs the computer implemented method is configured to communicate with a plurality of client systems, and the plurality of client systems comprise one or more original equipment manufacturer (OEM) systems.

The computer implemented method further includes applying a weight to the one or more client-provided parameters, wherein the weighted one or more client-provided parameters are applied to generate the response.

The computer implemented method further includes accessing one or more third party systems configured to provide contextual location information and updating the LLM by applying the contextual location information to the LLM, wherein the response is generated further based on the contextual location information from the one or more third party systems.

The computer implemented method further includes facilitating an interactive feedback loop during which a user provides refined request parameters, updating the response according to the refined request parameters, and transmitting the updated response to the client system.

The computer implemented method further includes facilitating customization of the one or more client-provided parameters via the client system.

A computer program product is provided, including at least one non-transitory computer-readable storage medium having computer-executable program code instructions stored therein, the computer-executable program code instructions comprising program code instructions to receive a request that originated at least from an in-vehicle system associated with a vehicle and a client system, wherein the request is based on at least one user-initiated query.

The computer-executable program code instructions further include program code instructions to receive, from the client system, one or more client-provided parameters, access user profile data associated with the at least one user-initiated query, generate a response by applying the request, the one or more client-provided parameters, and the user profile data to a location search engine, wherein the location search engine is configured with at least a large language model (LLM). The computer-executable program code instructions further include program code instructions to transmit the response to the client system.

An apparatus is provided, with means for receiving a request that originated at least from an in-vehicle system associated with a vehicle and a client system, wherein the request is based on at least one user-initiated query, and means for receiving, from the client system, one or more client-provided parameters.

The apparatus further includes means for accessing user profile data associated with the at least one user-initiated query, means for generating a response by applying the request, the one or more client-provided parameters, and the user profile data to a location search engine, wherein the location search engine is configured with at least a large language model (LLM). The apparatus further includes means for transmitting the response to the client system.
The following numbered paragraphs are also disclosed:
1. An apparatus comprising at least one processor and at least one memory including computer program code, the at least one memory and the computer program code configured to, with the at least one processor, cause the apparatus to at least:
   receive a request that originated at least from an in-vehicle system associated with a vehicle and a client system, wherein the request is based on at least one user-initiated query;
   receive, from the client system, one or more client-provided parameters;
   access user profile data associated with the at least one user-initiated query;
   generate a response by applying the request, the one or more client-provided parameters, and the user profile data to a location search engine, wherein the location search engine is configured with at least a large language model (LLM); and
   transmit the response to the client system.
2. The apparatus according to paragraph 1, wherein the apparatus is configured to communicate with a plurality of client systems, and the plurality of client systems comprise one or more original equipment manufacturer (OEM) systems.
3. The apparatus according to paragraph 1, wherein the one or more client-provided parameters comprise at least one of one or more tone-based instructions, one or more messaging style instructions, one or more branding consistency instructions, one or more economic-based instructions, or one or more sponsorship-based instructions.
4. The apparatus according to paragraph 1, wherein the at least one memory and the computer program code are further configured to cause the apparatus to at least:
   apply a weight to the one or more client-provided parameters, wherein the weighted one or more client-provided parameters are applied to generate the response.
*5.* The apparatus according to paragraph 1, wherein the at least one memory and the computer program code are further configured to cause the apparatus to at least:
   access one or more third party systems configured to provide contextual location information;
   update the LLM by applying the contextual location information to the LLM, wherein the response is generated further based on the contextual location information from the one or more third party systems.
6. The apparatus according to paragraph 1, wherein the response comprises at least one of a location-based search result, a navigation instruction, a natural language description, or a vehicle control instruction.
7. The apparatus according to paragraph 1, wherein information comprised by the response is provided via a user interface of the in-vehicle system.
8. The apparatus according to paragraph 7, wherein the at least one memory and the computer program code are further configured to cause the apparatus to at least:
   facilitate an interactive feedback loop during which a user provides refined request parameters;
   update the response according to the refined request parameters; and
   transmit the updated response to the client system.
9. The apparatus according to paragraph 1, wherein the at least one memory and the computer program code are further configured to cause the apparatus to at least:
   facilitate customization of the one or more client-provided parameters via the client system.
10. The apparatus according to paragraph 1, wherein at least one of the one or more client-provided parameters comprises sensor data detected from the vehicle.
11. The apparatus according to paragraph 1, wherein the response is utilized for providing routing instructions via a user interface of the in-vehicle system.
12. The apparatus according to paragraph 1, wherein the response is utilized for at least partial control of an automated driving system of the vehicle.
13. A computer implemented method comprising:
   receiving a request that originated at least from an in-vehicle system associated with a vehicle and a client system, wherein the request is based on at least one user-initiated query;
   receiving, from the client system, one or more client-provided parameters;
   accessing user profile data associated with the at least one user-initiated query;
   generating a response by applying the request, the one or more client-provided parameters, and the user profile data to a location search engine, wherein the location search engine is configured with at least a large language model (LLM); and
   transmitting the response to the client system.
14. The computer implemented method according to paragraph 13, wherein an apparatus that performs the computer implemented method is configured to communicate with a plurality of client systems, and the plurality of client systems comprise one or more original equipment manufacturer (OEM) systems.
*15.* The computer implemented method according to paragraph 13, wherein the one or more client-provided parameters comprise at least one of one or more tone-based instructions, one or more messaging style instructions, one or more branding consistency instructions, one or more economic-based instructions, or one or more sponsorship-based instructions.
16. The computer implemented method according to paragraph 13, wherein information comprised by the response is provided via a user interface of the in-vehicle system.
17. The computer implemented method according to paragraph 13, wherein at least one of the one or more client-provided parameters comprises sensor data detected from the vehicle.
18. The computer implemented method according to paragraph 13, wherein the response is utilized for providing routing instructions via a user interface of the in-vehicle system.
19. The computer implemented method according to paragraph 13, wherein the response is utilized for at least partial control of an automated driving system of the vehicle.
20. A computer program product comprising at least one non-transitory computer-readable storage medium having computer-executable program code instructions stored therein, the computer-executable program code instructions comprising program code instructions to:
   receive a request that originated at least from an in-vehicle system associated with a vehicle and a client system, wherein the request is based on at least one user-initiated query;
   receive, from the client system, one or more client-provided parameters;
   access user profile data associated with the at least one user-initiated query;
   generate a response by applying the request, the one or more client-provided parameters, and the user profile data to a location search engine, wherein the location search engine is configured with at least a large language model (LLM); and
   transmit the response to the client system.

### BRIEF DESCRIPTION OF THE DRAWINGS

Having thus described example embodiments of the disclosure in general terms, reference will now be made to the accompanying drawings, which are not necessarily drawn to scale, and wherein:
Figure 1 is a schematic diagram of a system in accordance with certain example embodiments of the present disclosure;
Figure 2 is a schematic diagram of an apparatus in accordance with certain example embodiments of the present disclosure;
Figure 3 is an example user interface for display to an end user in accordance with certain example embodiments of the present disclosure;
Figures 4-8 are example user interfaces for configuring client-provided parameters in accordance with certain example embodiments of the present disclosure; and
Figure 9 is a flowchart of a method in accordance with certain example embodiments of the present disclosure.

### DETAILED DESCRIPTION

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present disclosure.

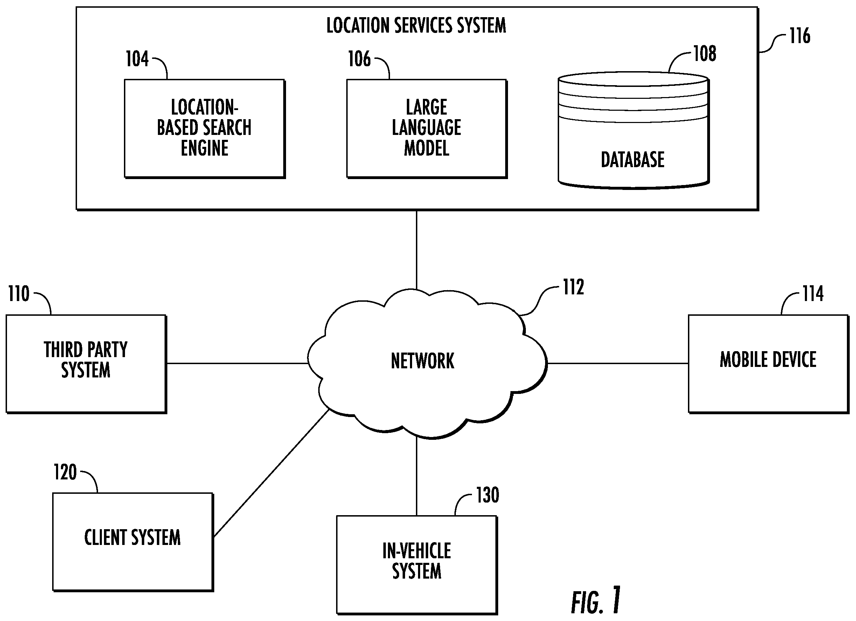

Figure 1 is a schematic diagram of a system in accordance with certain example embodiments of the present disclosure. The system of Figure 1 includes a location services system 116, including a location-based search engine 104, a large language model (LLM) 106, and a database 108. The location services system 116 is in data communication with a third party system 110, an in-vehicle system 130, a client system 120, such as an original equipment manufacturer (OEM) system, and a mobile device 114 through a network 112.

The location services system 116 may include computer systems of a service provider, and may provide location-based services such as related to routing, navigation, location searching, geocoding, mapping, positioning, geofencing, traffic reports, and/or the like.

The location services system 116 includes a location-based search engine 104, configured to generate location search results based on a set of input parameters. According to certain embodiments, the location-based search engine 104 applies client-provided parameters and user profile data to target the search and/or determine relevancy of potential search results.

The LLM 106 may be included in the location services system 116, or can be implemented remotely from the location services system 116. Use of the LLM 106 provides improvements over traditional LLMs, and to the location-based search engine 104 and the location services system 116 by applying and generating contextually relevant natural language descriptions of locations. The LLM 106 is an artificial intelligence system trained to process, generate, and respond to natural language. According to certain example embodiments, the LLM 106 is not a generic machine learning model nor generic large language model. Rather, the LLM 106 is improved in comparison to generic LLMs as it is enhanced with contextual information associated with locations. The contextual information can be obtained from one or more third party systems 110, which may include systems configured to collect and share reviews, star ratings, details, features, and the like for businesses, points of interest and the like. A third party system 110 may be affiliated with websites or businesses such as YELP, TRIPADVISOR, socials media platforms, or the like. According to certain embodiments, users may use a mobile device 114, in-vehicle system 130, or personal computing to provide feedback to a third party system 110. The feedback can be culled and analyzed by the LLM 106 to generate contextually relevant natural language descriptions of the locations.

The LLM 106 tokenizes input text, models processes and the tokens using layers or neural networks, and uses machine learning algorithms to train the LLM 106 to understand and generate natural language. In this regard, the LLM 106 generates contextual information from one or more third party systems 110 to generate natural language summaries describing locations, businesses, points of interest, and the like. According to certain embodiments, natural language descriptions of locations can used to provide contextually relevant information to users, and also to further target a search of location-based search engine 104. In this regard, the LLM 106 is improved in comparison to a generic LLM, as it generates more relevant outputs and natural language descriptions of locations.

The location services system 116 may further include database 108, such as a map server storing geospatial data including or relating to maps, coordinates, waypoints, navigational pathways, locations, points of interest, and the like. The database 108 may include node data, road segment data or link data, point of interest (POI) data, or the like. The database 108 may include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, cars, trucks, buses, motorcycles, and/or other entities. Optionally, the database 108 may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc.

The database 108 can include data about the POIs and their respective locations in the POI records. The database 108 may include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the database 108 can include event data (e.g., traffic incidents, construction activities, scheduled events, unscheduled events, etc.) associated with the POI data records or other records of the database 108.

The database 108 may be maintained by a location-based services provider that can collect geographic data to generate and enhance the database 108. Data can be obtained from other sources, such as municipalities or respective geographic authorities, third party systems 110, and the like. In addition, the location-based services provider can employ field personnel to travel by vehicle to observe features and/or record information about them, for example. Remote sensing, such as aerial or satellite photography, can be used to generate map geometries directly or through machine learning as described herein.

The database 108 may be a master map database stored in a format that facilitates updating, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as an in-vehicle system 130, for example. The navigation-related functions can correspond to vehicle navigation, pedestrian navigation, or other types of navigation. While example embodiments described herein generally relate to vehicular travel, example embodiments may be implemented for bicycle travel along bike, watercraft travel along waterway navigational routes, pedestrian travel etc. The compilation to produce the end user databases can be performed by a party or entity separate from the location-based services provider. For example, a customer of the location-based services provider, such as a navigation device service provider or other end user device service provider, can perform compilation on a received map database in a delivery format to produce one or more compiled navigation databases.

The database 108 may be implemented server-side as a part of the location services system 116, and/or a database 108 may represent a compiled database that may be used in or with end user devices (e.g., in-vehicle system 130) to provide navigation and/or map-related functions. The database 108 may further store user data, such as user location history, user preferences, user profiles, and the like. The location-based search engine 104 therefore accesses the database 108 to determine location search results, determine relevancy, rank or score locations, and/or the like.

The in-vehicle system 130 can include any hardware and/or software components integrated with the vehicle to control one or more operations associated with the vehicle and/or its operation. The in-vehicle system 130 can be an electronic control unit (ECU), an in-vehicle navigation system, such as a navigation system, an advanced driver assistance system (ADAS), an infotainment system, and/or the like. An end user can use the in-vehicle system 130 for navigation, routing, viewing maps, searching for locations and POIs, and the like. As used herein "end user" may refer to a user of the in-vehicle system 130, such a driver or passenger, such as to distinguish from other users, such as users of a client system 120. The term "end user" is therefore not intended to be limiting, and it will be appreciated that data communicated to or provided by the in-vehicle system 130 can indeed be transmitted to other devices having other or additional users. The in-vehicle system 130 may therefore include user interface components, such as but not limited to a display for displaying maps and navigational queues. The in-vehicle system 130 may further include a microphone and speaker, for voice and audio communication with an end user.

The in-vehicle system 130 may communicate with the location services system 116, optionally via a client system 120, such as OEM system associated with the manufacturer of the vehicle., vehicle management system that controls or manages a fleet of vehicles, and/or the like.

When the in-vehicle system 130 includes or is implemented as an ADAS, the ADAS may include semi-autonomous driver assistance features such as adaptive headlight aiming, adaptive cruise control, lane departure warning and control, curve warning, speed limit notification, hazard warning, predictive cruise control, adaptive shift control, among others. Other examples of an ADAS may include provisions for autonomous control of a vehicle to drive the vehicle along a road network without requiring input from a driver. Some of these advanced driver assistance systems use a variety of sensor mechanisms in the vehicle to determine the current state of the vehicle and the current state of the roadway ahead of the vehicle. These sensor mechanisms may include radar, infrared, ultrasonic, and vision-oriented sensors such as image sensors and light distancing and ranging (LiDAR) sensors.

Some advanced driver assistance systems may employ digital map data such as provided by the location services system 116, to utilize information about the road network, road geometry, road conditions, and other information associated with the road and environment around the vehicle. In the example embodiment of an autonomous vehicle, the ADAS uses the location services system 116 to navigate along a path route.

The in-vehicle system 130 may include one or more detectors or sensors as a positioning system built or embedded into or within the interior of the in-vehicle system 130. Alternatively, in-vehicle system 130 uses communications signals for position determination. The in-vehicle system 130 may receive location data from a positioning system, such as a global positioning system (GPS), cellular tower location methods, access point communication fingerprinting, or the like. The server 102, either directly or indirectly, may receive sensor data configured to describe a position of a mobile device, or a controller of the in-vehicle system 130 may receive the sensor data from the positioning system of the in-vehicle system 130. The in-vehicle system 130 may also include a system for tracking mobile device movement, such as rotation, velocity, or acceleration. Movement information may also be determined using the positioning system. The in-vehicle system 130 may use the detectors and sensors to provide data indicating a location of a vehicle. This vehicle data, also referred to probe data, may be collected by any device capable of determining the necessary information, and providing the necessary information to the location services system 116.

More specifically, probe data may be representative of the location of a vehicle at a respective point in time and may be collected while a vehicle is traveling along a route. According to the example embodiment described below with the probe data being from motorized vehicles traveling along roadways, the probe data may include, without limitation, location data, (e.g. a latitudinal, longitudinal position, and/or height, GPS coordinates, proximity readings associated with a radio frequency identification (RFID) tag, or the like), rate of travel, (e.g. speed), direction of travel, (e.g. heading, cardinal direction, or the like), probe source identifier, (e.g. vehicle identifier, user identifier, or the like), a time stamp associated with the data collection, or the like.

Location-based services (LBS) such as navigation, real-time traffic information, location based searches, and the like, are based on probe data and trajectory data. Trajectory data includes a set of data points, each data point including a location and a timestamp. The location may be in the form of latitude and longitude, and potentially altitude. Additional information may be associated with a data point, such as speed, heading, etc. If a trajectory identifier, device identifier, or session identifier is associated with each point, the trajectory data can describe the movement of a vehicle over a period of time.

According to an example embodiment described herein, an in-vehicle system 130 may transmit probe data and/or trajectory data in real time to client system 120. The client system 120 may transmit the data to location services system 116. The client system 120 may further communicate location-based requests that initiated from the in-vehicle system 130 to the location services system 116.

The in-vehicle system 130 may additionally include, or may be in data communication with one or more sensors and/or sub-systems of the vehicle to determine one or more conditions of the vehicle, its subsystems, or an environment. For example, an in-vehicle system 130 may obtain information from one or more sensors indicating weather conditions such as but not limited to rain, snow, or fog. As another example an in-vehicle system 130 may obtain information, based on weight sensors, regarding the driver or other passengers in the vehicle. The above are provides as examples, and it will be appreciated that the in-vehicle system may include or have access to various data relating to the operation of the vehicle, the environment of the vehicle, and/or the like.

The in-vehicle system 130 may additionally be in data communication with one or more mobile devices 114. For example, an end user's mobile device may be configured for near field communication (e.g., BLUETOOTH communication) with the in-vehicle system 130. A mobile device 114 may be configured to communicate with the in-vehicle system 130 via an interface such as APPLE CARPLAY, ANDROID AUTO, or the like. In this regard, the in-vehicle system 130 can use data from the mobile device 114 for further processing and/or communication to the client system 120. According to certain embodiments, an end user may interact with a mobile device 114 before entering a vehicle. For example, an end user may with to search for locations, then enter vehicle, and data from the mobile device 114 is communicated to the in-vehicle system 130 such that the end user can begin interacting with the in-vehicle system 130 in addition to, or instead of, the mobile device 114. In this regard, certain functionality described herein can be performed interchangeably on the mobile device 114 and/or in-vehicle system 130.

The client system 120 may include a server and/or system configured to communicate with the in-vehicle system 130 and the location services system 116. The client system 120 may include an OEM system, vehicle management system, or the like. For example, an OEM system may include a system operated by the manufacturer of the vehicle. A vehicle management system may include a system of an entity that operates a fleet of vehicles, such as a rental car company, taxicab service, autonomous vehicle fleet, or the like.

The client system 120 receives data from in-vehicle systems 130 corresponding to the client system, such as corresponding to the OEM, or vehicle management platform. For example, the in-vehicle system 130 may transmit navigational requests, location search requests, probe data, and/or the like, to the client system 120. The client system 120 may perform optional additional processing relating to such requests, and forward or initiate a request to the location services system 116. For example, the client system 120 can optionally include user profile data, including user preference data and/or the like stored by the client system 120, such as when a user registers a vehicle with the client system 120.

Responses from the location services system 116 are communicated to the client system 120, then routed to the in-vehicle system 130 for provision to an end user. Responses can include one or more location-based search results and related data (e.g., name of business, POI, or the like, address, coordinates (e.g., latitude and longitude), POI category, distance from a search location or current location, ratings, operating hours, icons or branding information, routing instructions or details, unique identifiers of the location, etc.), and/or the like. The search results can be ranked or sorted according to relevancy, and the search results may be displayed or presented based on the ranking. Responses can further include associated natural language descriptions of the locations in the search results and/or corresponding relevancy for the end user. Additionally and/or alternatively, the natural language descriptions can be tailored for the client as described in further detail herein. Responses can further include a navigation or routing instruction, a vehicle control instruction, or the like.

The client system 120 may further facilitate configuration of client-provided parameters that can be communicated to the location services system 116. For example, a user of a client system 120, such as an internal user or employee of a client such as an OEM, may access a user interface provided by the location services system 116 and provide parameters that are utilized by the location services system 116 to perform searches, along with user profile data, such as user preference data, user provided search parameters, and the like, as described in further detail herein. Client-provided parameters may include one or more tone-based instructions, one or more messaging style instructions, one or more brand consistency instructions, one or more economic-based instructions, or one or more sponsorship-based instructions. The client-provided parameters can therefore enable the client system to influence or tailor responses to location search requests for a specific brand or other client preferences. In this regard, the LLM 106 is further improved in comparison to general LLMs, by enabling the client to at least partially control outputs of the LLM 106.

The network by which any of the components of the system of Figure 1 communicate may be wired, wireless, or any combination of wired and wireless communication networks, such as cellular, Wi-Fi, internet, local area networks, or the like.

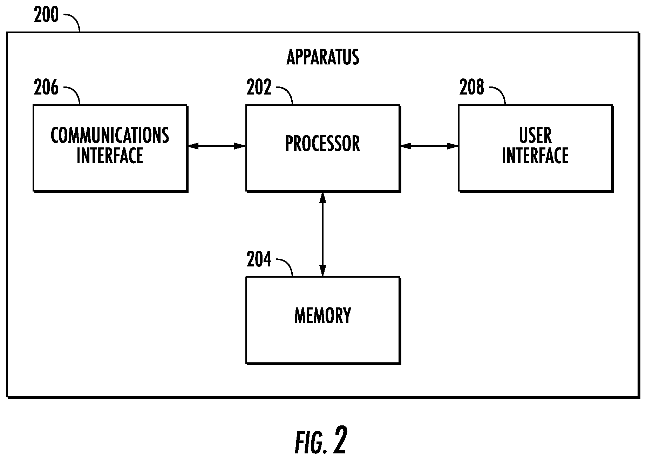

Figure 2 is a schematic of an apparatus 200 that may implement one or more of the components of the system of Figure 1, such as the location services system 116, location-based search engine 104, large language model 106, database 108, third party system 110, mobile device 114, client system 120, and in-vehicle system 130.

Apparatus 200 may include or otherwise be in communication with a processor 202, a memory 204, a communications interface 206, and a user interface 208. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or nonvolatile memories. In other words, for example, the memory device may be an electronic storage device (for example, a computer readable storage medium) comprising gates configured to store data (for example, bits) that may be retrievable by a machine (for example, a computing device like the processor 202). The memory device may include a database, and/or may be configured to store information, data, content, applications, instructions, or the like, for enabling the apparatus to carry out various functions in accordance with certain example embodiments of the present disclosure. For example, the memory device could be configured to buffer input data for processing by the processor. Additionally or alternatively, the memory device could be configured to store instructions for execution by the processor.

The processor 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 202 may be configured to execute instructions stored in the memory 204 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present disclosure while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor specific device (for example, a mobile terminal or a fixed computing device) configured to employ an embodiment of the present disclosure by further configuration of the processor by instructions for performing the algorithms and/or operations described herein. The processor may include, among other things, a clock, an arithmetic logic unit (ALU) and logic gates configured to support operation of the processor.

The apparatus 200 of an example embodiment may also include a communications interface 206 that may be any means such as a device or circuitry embodied in either hardware or a combination of hardware and software that is configured to receive and/or transmit data to/from a communications device in communication with the apparatus, such as to facilitate communications between one or more components of the system of Figure 1, or the like. In this regard, the communications interface may include, for example, an antenna (or multiple antennae) and supporting hardware and/or software for enabling communications with a wireless communication network. Additionally or alternatively, the communications interface may include the circuitry for interacting with the antenna(s) to cause transmission of signals via the antenna(s) or to handle receipt of signals received via the antenna(s). In some environments, the communications interface may alternatively or also support wired communication. As such, for example, the communications interface may include a communication modem and/or other hardware and/or software for supporting communication via cable, digital subscriber line (DSL), universal serial bus (USB) or other mechanisms.

The apparatus 200 may also include a user interface 208 that may in turn be in communication with the processor 202 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processor may comprise user interface circuitry configured to control at least some functions of one or more user interface elements such as a display and, in some embodiments, a plurality of speakers, a ringer, one or more microphones and/or the like. The processor and/or user interface circuitry comprising the processor may be configured to control one or more functions of one or more user interface elements through computer program instructions (for example, software and/or firmware) stored on a memory accessible to the processor (for example, memory 204, and/or the like).

The apparatus 200 of some embodiments may be integrated with or otherwise on-board the vehicle whereby the apparatus 200 may be equipped with or in communication with (e.g., via communications interface 206) one or more sensors, such as a Global Navigation Satellite System (GNSS) sensor (e.g., GPS, Galileo, GLONASS, etc.), accelerometer, image sensor, inertial measurement unit (IMU), gyroscope, magnetic field sensor, etc. Any of the sensors may be used to sense information regarding the location, movement, positioning, or orientation of the apparatus for use in identifying a location of the apparatus 200. In some embodiments, the apparatus 200 may derive information regarding location, movement, position, or orientation of the apparatus 200 based on communication signals perceived by the communications interface 206 such as through signal triangulation or signal fingerprinting, for example. In some embodiments, the apparatus may combine both sensor information and communication signals to drive a location of the apparatus 200.

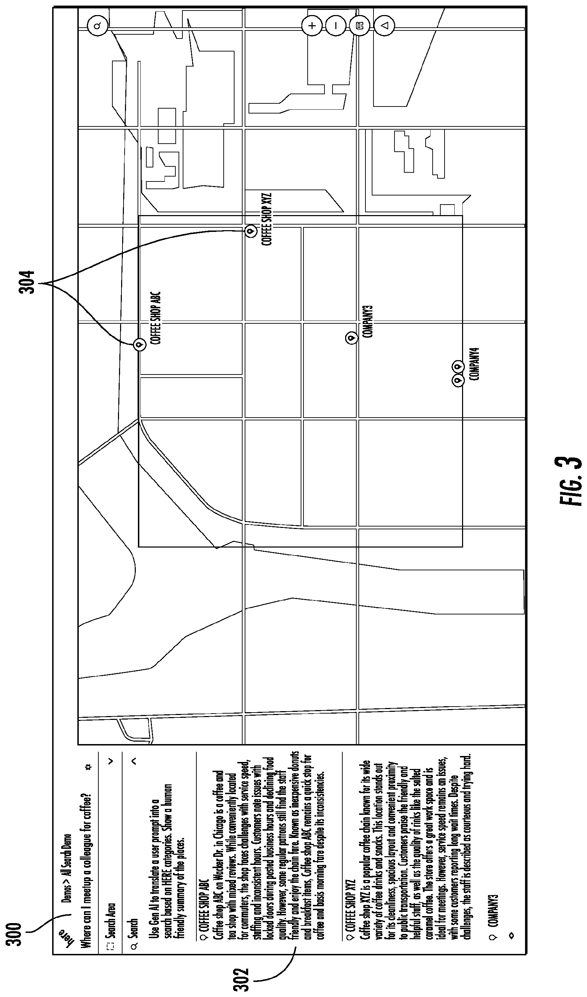

Figure 3 is an example user interface for display to an end user in accordance with certain example embodiments of the present disclosure. The user interface may be generated by the location services system 116, communicated via the client system 120, and displayed via a user interface of the in-vehicle system 130. An end user such as a driver or a passenger of a vehicle can initiate a search, such as by voice command, selection of a pre-determined search option, or the like. For example, see request 300 reflected on the user interface of Figure 3, which can be initiated by voice command, for example: "Where can I meetup a colleague for coffee?"

Search results are provided at 302, may be ranked based on relevancy and/or proximity and/or a combination thereof, and include a natural language summary of the results that are tailored for the client system (e.g., OEM) and the end user. The results are therefore location-relevant for the user, address the user's question or search request, are tailored for the client (e.g., OEM), and are further influenced based on user profile or user preference data. For example, the user may prefer chain coffee shops over local coffee shops. The summary, generated with the LLM 106 includes contextual information determined to be useful to the user in determining a location to visit. The locations 304 of the search results are illustrated on a map-based interface displayed via the in-vehicle system 130.

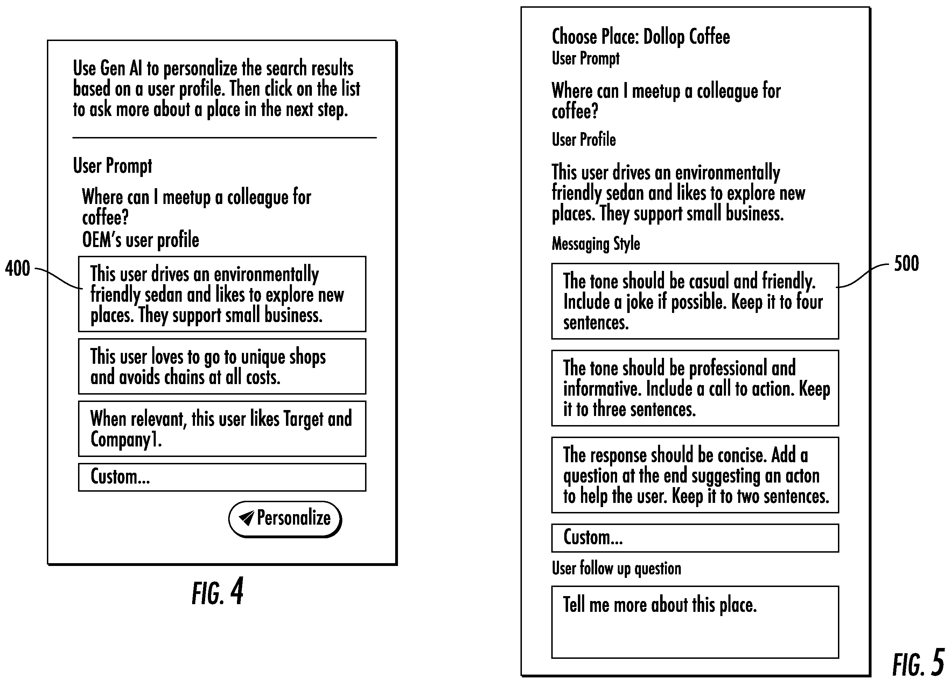

Figures 4-8 are example user interfaces for configuring client-provided parameters in accordance with certain example embodiments of the present disclosure. Figures 4-8 can also be considered demonstration tools according to certain example embodiments. Based on an end user's profile, such as one stored and maintained by client system 120, the client system 120 generates additional information as client-provided parameters. According to certain embodiments, such as illustrated in Figure 4, the client-provided parameters may include natural language descriptions 400 of user profile data, indicating a vehicle type, the user liking to explore new places, supporting small businesses, enjoying shopping, avoiding chains, and some favorite retailers and/or businesses of the user.

According to certain embodiments, client-provided parameters can include information regarding preferred messaging style. An OEM, for example, may select a preferred messaging style based on branding or the tone desired to be conveyed. The client-provided parameters 500 include messaging styles conveying a casual and friendly tone, inclusion of jokes, and a preferred maximum of sentences. Another option of client-provided parameters 500 includes a professional and informative tone, and including a call to action. Another example of client-provided parameters 500 relating to messaging style includes a concise natural language description in an associated response, or including a question at the end suggestion an action to help the user and to facilitate an interactive feedback loop based on refined request parameters. In this regard, the LLM 106 is improved, in comparison to generic LLMs, by enabling one or more client systems 120 to influence the end user outputs, such as the search results and the natural language descriptions of locations. The improvements to the LLM 106 include the generation of outputs tailored for the client system 120 and/or the end user. The location services system 116 is further improved by providing the contextually relevant results and their relevant natural language descriptions to an in-vehicle system 140 for provision to an end user.

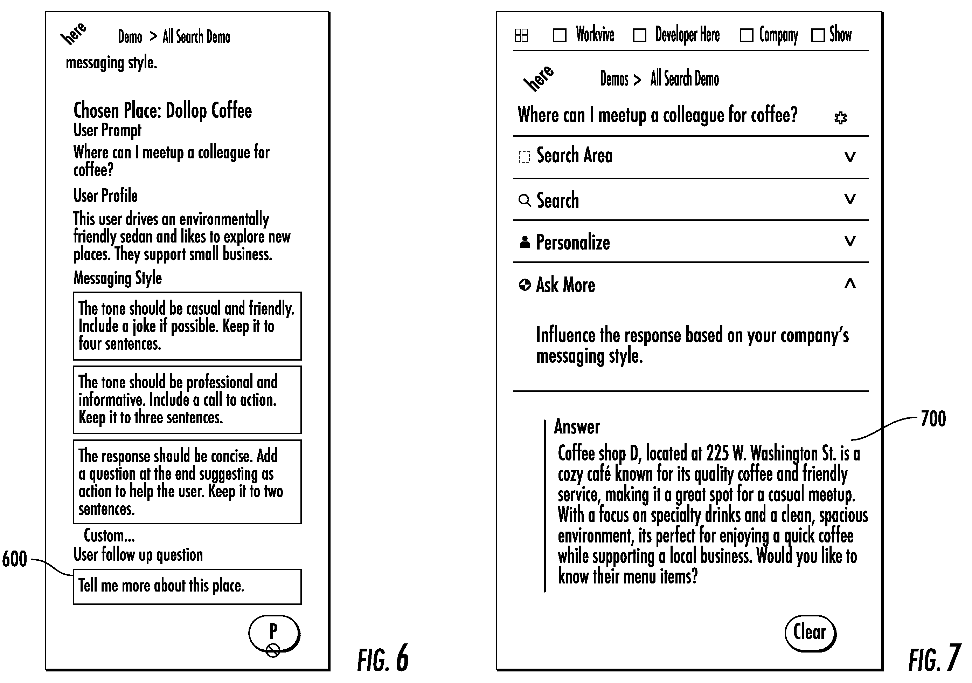

As shown in Figure 6, the user can ask a follow up question 600, such as "Tell me more about this place." As shown in Figure 7, the example natural language description 700 of the response provides a detailed description based on the client-provided parameters such as messaging style.

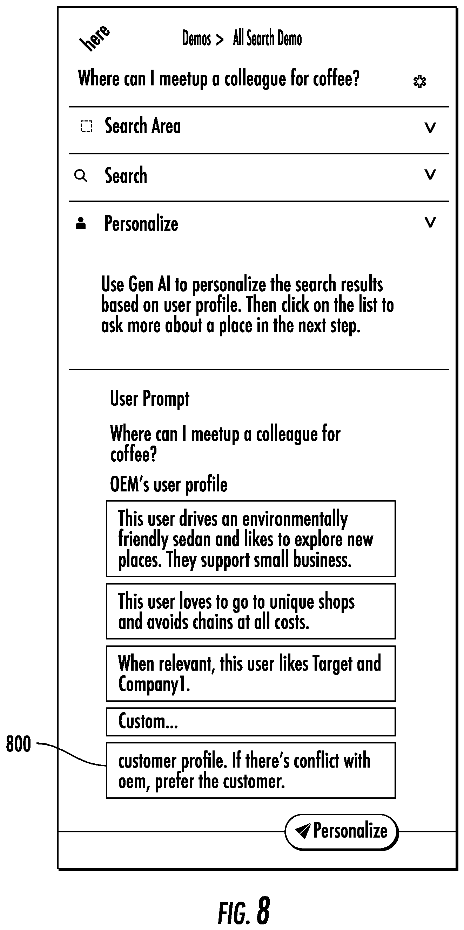

As shown in Figure 8, example embodiments provide for entry of custom client-provided parameters. For example, the client-provided parameter 800 includes a custom entry reciting, "If there's a conflict with OEM, prefer the customer." In this regard, the customer profile or preference data is weighted more significantly than other client-provided parameters, such as those that would impact the search results. For example, if an OEM of a luxury car has client-provided parameters indicating preference toward high-end restaurants, but the end user has preferences indicating preferred budget restaurants, the results should be favored toward the budget restaurants because the client-provided parameters further indicated to favor the customer preferences. According to certain embodiments, the location-based search engine 104 applies a weight to the one or more client-provided parameters, wherein the weighted one or more client-provided parameters is applied to the location services system to generate a response.

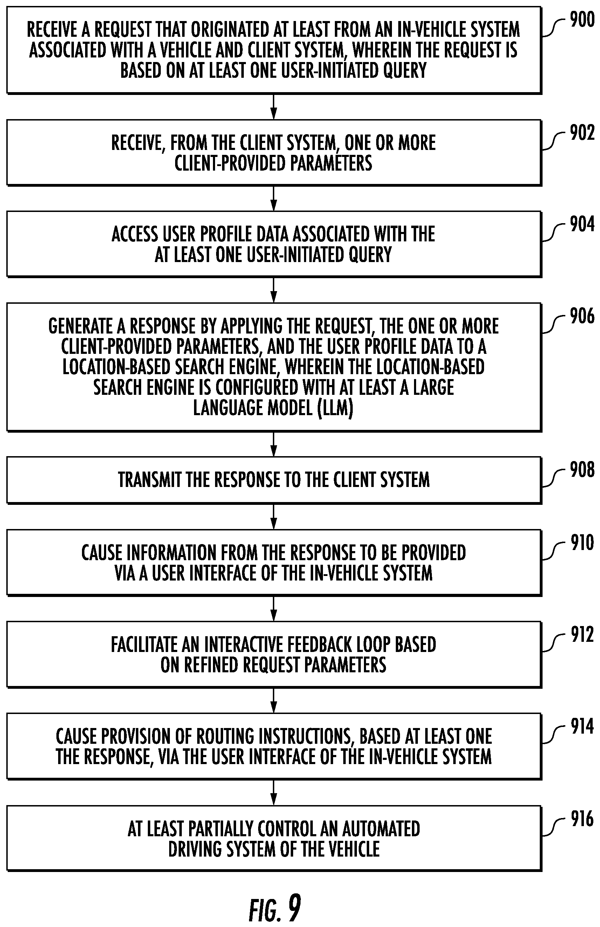

Figure 9 is a flowchart of operations performed by apparatus 200, according to certain example embodiments disclosed herein, such as location services system 116. At operation 900, the location services system 116 includes means, such as processor 202, memory 204, communications interface 206, user interface 208, or the like, for receiving a request that originated at least from an in-vehicle system associated with a vehicle and the client system, wherein the request is based on at least one user-initiated query. An end user can provide a user-initiated query via an in-vehicle system 130 by voice command, selection of a user interface component, entry of a query via a user interface, or the like. The request is transmitted via the client system 120 to the location services system 116. In this regard, the request is associated with a vehicle of the in-vehicle system 130 and the client system 120 by which the request was transmitted. The query can include one or more parameters, such as user-provided search parameters, such a POI category including but not limited to coffee shop, restaurant, hotel, or the like, and is transmitted in the request from the in-vehicle system 130. The request can further include vehicle metadata (e.g., vehicle context such as an electric vehicle, range constraints, etc.), locale or language settings, and/or the like. The request can additionally or alternatively include location data, probe data, trajectory data, or the like, to further limit the search to a geographical area, along a route, etc. The request can include device or service authentication credentials, such as application programming interface (API) keys, tokens, or the like. The request can be transmitted from the in-vehicle system 130, to the client system 120, and further transmitted to the location services system 116.

At operation 902, the location services system 116 includes means, such as processor 202, memory 204, communications interface 206, user interface 208, or the like, for receiving, from the client system, one or more client-provided parameters. In this regard, the location services system 116 receives one or more client-provided parameters, which may be transmitted with or in association with the request. As another example, client-provided parameters may be provided to the location services system 116 as a separate process independent of the request. For example, a client system 120 may transmit client-provided parameters to the location services system 116 as they are initially configured, generated, or modified by the client system 120. As another example, client-provided parameters can be transmitted from the client system 120 as apart of a batch or routine process.

An OEM or vehicle management system can therefore influence the response provided to an end user, and different OEMs can influence responses in different ways. For example, some client systems may have greater influence on search results than other client systems. According to certain example embodiments, a client may pay so that their client system has greater influence in search results, in comparison to the influence other client systems might have by default, for example.

Client-provided parameters can influence the locations that are returned in search results and/or the way in which a response is provided. The one or more client-provided parameters can include, for example, at least one of one or more tone-based instructions, one or more messaging style instructions, one or more brand consistency instructions, one or more economic-based instructions, or one or more sponsorship-based instructions.

The tone-based instructions can include any parameters or instructions regarding the tone of the message to be provided in a natural language response to the end user, such as for example, the example client-provided parameters 500 of Figure 5. A tone can reflect the attitude or emotional quality of a message, or the feeling it conveys to an end user. For example, the tone-based instructions can include friendly, assertive, casual, humorous, and/or the like.

The messaging style instructions can include any characteristic of how a response is to be communicated, such as formal vs. informal, concise vs. detailed, and/or the like. For example, certain vehicle OEMs may have preferred partners or suppliers for vehicle components or parts, such that the preferred partners or suppliers are more likely to be returned in a response, such as in comparison to competitor businesses or the like.

Economic-based instructions may indicate preference for more expensive retail shops, restaurants or the like, in comparison to less expensive locations. For example, an OEM of a luxury car may provide client-provided parameters indicating to favor more expensive locations in associated search results, in comparison to an OEM of a budget car that may provide client-provided parameters indicating to favor less expensive locations, such as fast food restaurants.

Sponsorship-based instructions may be based on sponsorships of certain businesses to engage with a client associated with the client system 120. A business may optionally compensate the client in exchange for favorability in search results. For example, a particular restaurant or other business can have an agreement with an OEM that search results for the restaurant or other businesses are ranked higher in search results. As another example, particular response dialogues could be incorporated into a natural language description associated with the restaurant or other business returned in a response to a request, to promote the location. The above types of client-provided parameters are provided as examples and it will be appreciated that many variations or other client-provided parameters can be contemplated.

At operation 904, the location services system 116 includes means, such as processor 202, memory 204, communications interface 206, or the like, for accessing user profile data associated with the at least one user-initiated query. According to certain embodiments, the user profile data can be received from the client system 120, such as with or in association with the request that originated from the in-vehicle system, and is communicated via the client system 120. As another example, the location services system 116 can store user profile data, for registered users, for example. The user profile data can include user preference data, such as selected or entered by a user via a user profile user interface. In this regard, a user may register with an OEM after purchasing a new vehicle and provide personal information including preference data. For example, user profile data can indicate an end user prefers small businesses, avoids chains, has strong preferences for chains or specific chains defined in the user profile data, prefers quieter spaces, prefers coffee locations with drive through windows so they don't have to get out of the vehicle, etc.

The user profile data can further include preference data inferred from sensor data of a vehicle, such as but not limited to location data (e.g., locations or information relating to locations an end user has visited). An end user's preference for low music volume (e.g., under a certain threshold such as 10%) may indicate the user prefers quiet spaces as opposed to noisy spaces. Location data indicating past locations the end user has visited may be stored as user profile data. Any sensor data detected from the vehicle and/or in-vehicle system 130 can be used to generate and stored user profile data that in turn is used to tailor search results and/or natural language descriptions thereof. It will be appreciated that the above examples of user profile data and obtaining user profile data are not intended to be limiting, and that a variety of data sources can be used to obtain used profile data pertaining to the end user that initiated a query.

According to certain embodiments, the user profile data can be maintained and edited over time, as the end user visit different locations in their vehicle, provides reviews or other feedback via the in-vehicle system 130, third party system 110, mobile device 114, or the like. For example, following a search and being presented with results, an end user may provide feedback about why they don't like certain results, or why they prefer other locations, or any other user-specific behavioral inputs. Some of this information may be transmitted to the client system 120 and/or location services system 116 and converted to user profile data such that example embodiments learn to improve the relevancy of search results for the user.

At operation 906, the location services system 116 includes means, such as processor 202, memory 204, communications interface 206, or the like, for generating a response by applying the request, the one or more client-provided parameters, and the user profile data to a location-based search engine 104, wherein the location-based search engine 104 is configured with at least the LLM 106. According to certain embodiments, the location services system 116 invokes the location-based search engine 104, and the location-based search engine 104 applies location-based search results to the LLM 106. Additionally or alternatively, the location-based search engine 104 and LLM 106 communicate in an iterative manner, to identify and refine relevancy of location-based search results.

According to certain embodiments, pre-processing may be optionally performed on data from the request, the one or more client-provided parameters, and/or the user profile data before applying the data to the LLM 106. For example, an initial location-based search can be performed using the location-based search engine 104 based on a POI category and location (e.g., location data, such as probe data, trajectory data, and/or the like), and/or other parameters. Such results can be further filtered by the location-based search engine 104 and/or LLM 106, or by the location-based search engine 104 using the LLM 106.

Vehicle metadata, vehicle parameters, vehicle sensor data and/or the like can be used in the search. For example, a fuel or charge range can be used to determine locations within a distance reachable by the vehicle before needing to refuel or recharge. If a vehicle needs an electric charge, results may include locations with charging stations, and/or locations may be tailored for a longer expected wait while the vehicle charges (e.g., a sit down restaurant with charging stations rather than fast food restaurants). Numerous variations can be contemplated.

Responses can include one or more search results pertaining to locations, and associated natural language descriptions of the location and/or associated relevancy for the end user. The LLM is leveraged not only to identify locations to be returned in a response (e.g., by utilizing reviews and other natural language descriptions of locations), but by generating natural language descriptions for the response that are tailored based on one or more client-provided parameters and/or user profile data. The LLM can be updated on an ongoing basis by access one or more third party systems configured to provide contextual location information. The third party systems can include websites or businesses such as YELP, TRIPADVISOR, socials media platforms, or the like. In this regard, the LLM is populated with reviews, ratings, and descriptions of certain locations, and the LLM can learn what types of features of the locations are appealing for certain end users, identify correlations between certain locations and/or type of end user, user profile data, and/or the like.

According to certain example embodiments, a search is performed using the request based on the user-initiated query. The request can include the user-initiated query, such as key search terms, location type, or point of interest type. For example, the query may include a search for a nearby coffee shop or restaurant. The request, client-provided parameters and user profile data can be applied to a search request with any varying weights, filtering process, of the like. For example, based on user provided search terms or query, a first set of potential results can be generated, such as all coffee shops within a certain radius (e.g., user defined or predefined) of a user's current location. A set of results can be further filtered, or weighted, based on client-provided parameters such as those relating to tone, messaging style, branding, economic-based instructions, sponsorship or the like. According to certain example embodiments, search parameters, including the client-provided parameters and/or user profile data can be weighted differently, such as for the purpose of identifying results, ranking results, scoring relevancy, and/or the like. Certain example embodiments may therefore apply a weight (and optionally different weights) to the one or more client-provided parameters and/or user profile data, such as with the location-based search engine 104 and/or location services system 116.

Additionally or alternatively, search results can be sorted based on any combination of proximity, and relevancy according to one or more client-provided parameters and/or user profile data. Many variations of applying the client-provided parameters and/or user profile data to a location-based search functionality of the location services system 116 can be contemplated. In any event, the location services system 116 is improved by enabling the client system 120 to influence the search results or how they are conveyed, and moreover, enabling multiple different client systems 120 to provide such influence in different ways than one another. For example, one OEM may desire to have more a more formal tone in its messaging, in comparison to another OEM.

At operation 908, the location services system 116 includes means, such as processor 202, memory 204, communications interface 206, user interface 208, or the like, for transmitting the response to the client system. In this regard, the response, such as the search results pertaining to locations, corresponding natural language descriptions, rankings, and/or routing instructions, are provided to the client system 120 that transmitted the request to the location services system 116.

At operation 910, the location services system 116 includes means, such as processor 202, memory 204, communications interface 206, user interface 208, or the like, for causing information from the response to be provided via a user interface of the in-vehicle system. The client system 120 can further direct the in-vehicle system 130 to provide visual prompts, queues, and/or the like via a display. According to certain example embodiments, a visual display including a map view can be updated to reflect the search results, as presented in Figure 3. The locations can be associated on the display with the location details and natural language descriptions provided in the response. The in-vehicle system 130 can provide audible selections regarding search results and/or dictate the natural language descriptions of the locations to the user.

At operation 912, the location services system 116 includes means, such as processor 202, memory 204, communications interface 206, user interface 208, or the like, for optionally facilitating an interactive feedback loop based on refined request parameters. In this regard, after information from the response is provided via a user interface, an end user can further interact by refining search parameters, or the like. For example, if the search results include all fine dining restaurants, an end user can indicate they would like a more casual restaurant. In this regard, any of the operations of Figure 9 can be repeated via an interactive feedback loop, to create a new request and/or response, and/or to further refine search parameters and update the search accordingly. In this regard, example embodiments update the response according to the refined request parameters According to certain embodiments, the refinement or additional interactions by the end user can be stored as user profile data or user preference data, such as by the client system 120. An end user can then select a search result accordingly.

At operation 914, the location services system 116 includes means, such as processor 202, memory 204, communications interface 206, user interface 208, or the like, for optionally causing provision of routing instructions, based at least one the response, via the user interface of the in-vehicle system. In this regard, location data associated with a location may be utilized by the location services system 116 to obtain routing instructions, navigational instructions and/or the like. The instructions can be communicated via the client system 120 to the in-vehicle system 130, and can include turn-by-turn instructions. The instructions can be updated in real-time as the vehicle travels along a route or toward the location. According to certain embodiments, routing instructions can also be tailored according to client-provided parameters and/or user profile data. For example, a fine dining restaurant may have an agreement with an OEM that luxury cars of a certain brand are directed to park in front of a restaurant for visibility, whereas default routing instruction, or instructions for other client systems send drivers to a rear or less visible parking lot. Any variation of routing instructions according to client-provided parameters and/or user profile data can be contemplated.

At operation 916, the location services system 116 optionally includes means, such as processor 202, memory 204, communications interface 206, or the like, for at least partially controlling an automated driving system of the vehicle. The response can include a navigation or routing instruction, vehicle control instruction, and/or the like. For example, an autonomous vehicle or a semi-autonomous vehicle may have certain subsystems controlled by the in-vehicle system 130, ECU, and/or the like. In this regard, an autonomous vehicle could be controlled to travel to a location returned in a response, and/or to a particular entrance, parking lot, and/or the like.

Example embodiments disclosed herein therefore provide an improved location services system 116, client system 120, and in-vehicle system 130. The improvements to the location services system 116 provide that user-relevant and client-relevant search results and natural language descriptions are returned to the user, often in response to a first search or with little refinement, in comparison to searches performed without employing example embodiments disclosed herein. This improvement in relevancy for the end user conserves and reduces computer resources and network resources that would otherwise need to be used to refine search criteria, and in general, have more feedback iterations between the in-vehicle system 130, client system 120, and location services system 116 in order to arrive at search results that satisfy the end user. In contrast, according to example embodiments disclosed herein, the location services system 116 learns the preferences of the user and the client-provided parameters so that even a first search yields results targeted to preferences to the end user. Moreover, the natural language descriptions are tailored for the end user and/or client, such that the end user can more quickly and more efficiently discern which location out of a plurality of locations provided in a response, the end user will be most satisfied with.

Example embodiments disclosed herein further provide an improvement to the client system 120, by enabling the client to access user interfaces to customize preferences for the client. In this regard, the client's influence can be systematically and efficiently applied to searches initiated at the in-vehicle system 130, and responses are tailored for the client system 120 in a way that facilitates brand consistency, integration with partner businesses, increased customer satisfaction, and/or the like,
Improvements to the in-vehicle system 130 include increased efficiency of the system for an end user initiating a search. Because client-provided parameters and user profile data is automatically incorporated into the search by the location services system 116, the end user has few search parameters and/or filtering that needs to be performed when searching, which improves the efficiency of the in-vehicle system 130, and related systems, whereas without example embodiments, the user may have to enter extensive search criteria, and further filter results based on preferences. The improvement therefore leads to a reduced number of messages transmitted between the in-vehicle system 130, locations services system 116, and related systems that would otherwise be needed for the user to alter search criteria, filter search results, narrow the search results, and/or the like, to obtain more relevant search results than what would be provided by a generic search and without the advantages of the present disclosure.

By embedding client-provided context into prompts and natural language descriptions, example embodiments provide responses, tone, and communication style that is personalized for ended users and scaled across the client's user base. Example embodiments therefore provide highly relevant, enriched recommendations that align with the unique preferences and branding goals of both end users and clients, such as OEMs. The LLM 106 is therefore improved in comparison to generic LLMs, and is not merely a generic LLM. The improvements include the integration of client-provided parameters from the client system 120, such that search results and natural language descriptions generated by the LLM 106 are at least partially controlled by client associated with the client system 120, such as by an OEM. An additional improvement to the LLM 106 includes the provision of more contextually relevant search results and natural language descriptions for the user, in comparison to what would be provided by a generic LLM. The improvements are therefore also realized by the location services system 116 in provided the client-tailored and contextually relevant results and descriptions to the end user via the in-vehicle system 130.

Figure 9 illustrates a flowchart depicting methods according to an example embodiments of the present disclosure. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory 204 of an apparatus employing an embodiment of the present invention and executed by a processor 202 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

## Claims

1. An apparatus comprising at least one processor and at least one memory including computer program code, the at least one memory and the computer program code configured to, with the at least one processor, cause the apparatus to at least:
receive a request that originated at least from an in-vehicle system associated with a vehicle and a client system, wherein the request is based on at least one user-initiated query;
receive, from the client system, one or more client-provided parameters;
access user profile data associated with the at least one user-initiated query;
generate a response by applying the request, the one or more client-provided parameters, and the user profile data to a location search engine, wherein the location search engine is configured with at least a large language model (LLM); and
transmit the response to the client system.

2. The apparatus according to claim 1, wherein the apparatus is configured to communicate with a plurality of client systems, and the plurality of client systems comprise one or more original equipment manufacturer (OEM) systems.

3. The apparatus according to claim 1, wherein the one or more client-provided parameters comprise at least one of one or more tone-based instructions, one or more messaging style instructions, one or more branding consistency instructions, one or more economic-based instructions, or one or more sponsorship-based instructions.

4. The apparatus according to claim 1, wherein the at least one memory and the computer program code are further configured to cause the apparatus to at least:
apply a weight to the one or more client-provided parameters, wherein the weighted one or more client-provided parameters are applied to generate the response.

5. The apparatus according to claim 1, wherein the at least one memory and the computer program code are further configured to cause the apparatus to at least:
access one or more third party systems configured to provide contextual location information;
update the LLM by applying the contextual location information to the LLM, wherein the response is generated further based on the contextual location information from the one or more third party systems.

6. The apparatus according to claim 1, wherein the response comprises at least one of a location-based search result, a navigation instruction, a natural language description, or a vehicle control instruction.

7. The apparatus according to claim 1, wherein information comprised by the response is provided via a user interface of the in-vehicle system.

8. The apparatus according to claim 7, wherein the at least one memory and the computer program code are further configured to cause the apparatus to at least:
facilitate an interactive feedback loop during which a user provides refined request parameters;
update the response according to the refined request parameters; and
transmit the updated response to the client system.

9. The apparatus according to claim 1, wherein the at least one memory and the computer program code are further configured to cause the apparatus to at least:
facilitate customization of the one or more client-provided parameters via the client system.

10. The apparatus according to claim 1, wherein at least one of the one or more client-provided parameters comprises sensor data detected from the vehicle.

11. The apparatus according to claim 1, wherein the response is utilized for providing routing instructions via a user interface of the in-vehicle system.

12. The apparatus according to claim 1, wherein the response is utilized for at least partial control of an automated driving system of the vehicle.

13. A computer implemented method comprising:
receiving a request that originated at least from an in-vehicle system associated with a vehicle and a client system, wherein the request is based on at least one user-initiated query;
receiving, from the client system, one or more client-provided parameters;
accessing user profile data associated with the at least one user-initiated query;
generating a response by applying the request, the one or more client-provided parameters, and the user profile data to a location search engine, wherein the location search engine is configured with at least a large language model (LLM); and
transmitting the response to the client system.

14. The computer implemented method according to claim 13, wherein an apparatus that performs the computer implemented method is configured to communicate with a plurality of client systems, and the plurality of client systems comprise one or more original equipment manufacturer (OEM) systems.

15. A computer program product comprising at least one non-transitory computer-readable storage medium having computer-executable program code instructions stored therein, the computer-executable program code instructions comprising program code instructions to:
receive a request that originated at least from an in-vehicle system associated with a vehicle and a client system, wherein the request is based on at least one user-initiated query;
receive, from the client system, one or more client-provided parameters;
access user profile data associated with the at least one user-initiated query;
generate a response by applying the request, the one or more client-provided parameters, and the user profile data to a location search engine, wherein the location search engine is configured with at least a large language model (LLM); and
transmit the response to the client system.
